# EUROPEAN PATENT SPECIFICATION

(11) **EP 3 766 362 B1**
(45) Date of publication and mention of the grant of the patent: **28.12.2022**
(21) Application number: 20170361.8
(22) Date of filing: 03.10.2016
(51) Int. Cl.: A23L 27/30, A23L 27/00, A23L 2/00, A23L 2/60

(54) **METHOD OF PRODUCTION OF STEVIOL GLYCOSIDE SWEETENERS WITH IMPROVED FLAVOR PROFILES**
METHODE ZUR HERSTELLUNG VON STEVIOL-GLYKOSID-SÜSSSTOFFEN MIT VERBESSERTEN GESCHMACKSPROFILEN
METHODE DE PREPARATION D'EDULCORANTS DE GLYCOSIDE DE STEVIOL AVEC DES PROFILS DE SAVEUR AMELIORES

(30) Priority: 02.10.2015 US 201562236362 P; 11.12.2015 US 201562266174 P
(43) Date of publication of application: 20.01.2021
(62) Divisional of application: 16852817.2
(73) Proprietor: The Coca-Cola Company, Atlanta, GA 30313 (US); PureCircle SDN BHD, 71760 Bandar Enstek, Negeri Sembilan (MY)
(72) Inventor: PRAKASH, Indra, Alpharetta, Georgia 30022 (US); JETTI, Rajesh, Atlanta, Georgia 30339 (US); TAN, Colin, Marietta, Georgia 30068 (US); MA, Gil, Atlanta Georgia 30308 (US); MARKOSYAN, Avetik, Kuala Lumpur 59200 (MY)
(74) Representative: Dehns

(56) References cited:
- WO-A1-2016/085919
- US-A1- 2015 017 284
- MASAYA OHTA ET AL: "Characterization of Novel Steviol Glycosides from Leaves of Stevia rebaudiana Morita", OYO TOSHITSU KAGAKU - JOURNAL OF APPLIED GLYCOSCIENCE., vol. 57, no. 3, 17 August 2010 (2010-08-17), pages 199-209, XP055121080, JP ISSN: 1340-3494, DOI: 10.5458/jag.57.199

## Description

### FIELD OF THE INVENTION

The present invention relates generally to a method of preparing steviol glycoside compositions containing rebaudioside D, rebaudioside M, rebaudioside A, rebaudioside N, rebaudioside O, and rebaudioside E. Disclosed herein but not part of the invention are sweetener compositions comprising the compositions obtained by the method of the invention, as well as consumables, particularly beverages, comprising such steviol glycoside compositions and sweetener compositions comprising the same, as well as methods for preparing said consumables.

### BACKGROUND OF THE INVENTION

Natural caloric sugars, such as sucrose, fructose and glucose, are utilized to provide a pleasant taste to beverages, foods, pharmaceuticals, and oral hygienic/cosmetic products. Sucrose, in particular, imparts a taste preferred by consumers. Although sucrose provides superior sweetness characteristics, it is disadvantageously caloric.

Non-caloric or low caloric sweeteners have been introduced to satisfy consumer demand. However, non- and low caloric sweeteners taste different from natural caloric sugars in ways that frustrate consumers. On a taste basis, non-caloric or low caloric sweeteners exhibit a temporal profile, maximal response, flavor profile, mouth feel, and/or adaptation behavior that differ from sugar. Specifically, non-caloric or low caloric sweeteners exhibit delayed sweetness onset, lingering sweet aftertaste, bitter taste, metallic taste, astringent taste, cooling taste and/or licorice-like taste. On a source basis, many non-caloric or low caloric sweeteners are synthetic chemicals. Consumer desire for natural non-caloric or low caloric sweeteners that tastes like sucrose remains high.

*Stevia rebaudiana* Bertoni is a perennial shrub of the *Asteraceae* (*Compositae*) family native to certain regions of South America. Its leaves have been traditionally used for hundreds of years in Paraguay and Brazil to sweeten local teas and medicines. The plant is commercially cultivated in Japan, Singapore, Taiwan, Malaysia, South Korea, China, Israel, India, Brazil, Australia and Paraguay.

The leaves of the plant contain a mixture containing diterpene glycosides in an amount ranging from about 10% to 15% of the total dry weight. These diterpene glycosides are about 30 to 450 times sweeter than sugar. Structurally, the diterpene glycosides are characterized by a single base, steviol, and differ by the presence of carbohydrate residues at positions C13 and C19. Typically, on a dry weight basis, the four major steviol glycosides found in the leaves of Stevia are dulcoside A (0.3%), rebaudioside C (0.6-1.0%), rebaudioside A (3.8%) and stevioside (9.1%). Other glycosides identified in Stevia extract include rebaudioside B, D, E, and F, steviolbioside and rubusoside. Among these, only stevioside and rebaudioside A are available on a commercial scale.

Use of isolated steviol glycosides has been limited to date by certain undesirable taste properties, including licorice taste, bitterness, astringency, sweet aftertaste, bitter aftertaste, licorice aftertaste, which become more prominent at increased concentrations.

Accordingly, there remains a need to develop non-caloric sweeteners that provide a temporal and flavor profile similar to the temporal and flavor profile of sucrose.

### SUMMARY OF THE INVENTION

The present invention is defined by the claims and generally relates to a method of preparing steviol glycoside compositions useful for preparing consumables, such as beverages.

The steviol glycoside compositions obtained by the method of the present invention provide improved sensory properties over purified steviol glycoside sweeteners (i.e. rebaudioside A or rebaudioside M) and mixtures of purified steviol glycoside sweeteners (i.e. rebaudioside M and rebaudioside D). For example, due to the maximal sucrose equivalence of rebaudioside A, zero-calorie beverages sweetened with rebaudioside A only cannot be prepared that have 10 degrees Brix, the level typical of sucrose-sweetened beverages. Moreover, the high concentrations of purified rebaudioside A sweeteners needed to prepare zero-calorie beverage are also accompanied by a high level of sweet aftertaste (i.e. sweetness lingering), which is not desirable to consumers.

The steviol glycoside composition obtained by the method of the present invention has a total steviol glycoside content of about 95% by weight or greater and contains (a) a major component comprising rebaudioside M and rebaudioside D and (b) a minor component comprising rebaudioside A, rebaudioside N, rebaudioside O and rebaudioside E. In the steviol glycoside composition, rebaudioside D accounts for from about 55% to about 70% total steviol glycoside content by weight; rebaudioside M accounts for from about 18% to about 30% total steviol glycoside content by weight; rebaudioside A accounts for from about 0.5% to about 4% total steviol glycoside content by weight; rebaudioside N accounts for from about 0.5% to about 5% total steviol glycoside content by weight, rebaudioside O accounts for from about 0.5% to about 5% total steviol glycoside content by weight and rebaudioside E accounts for from about 0.2% to about 2% total steviol glycoside content by weight

In one embodiment, rebaudiosides D, M, A, N, O and E account for at least about 90% of the total steviol glycoside content. The steviol glycoside composition preferably provides a concentration from about 50 ppm to about 900 ppm, and/or from about 3 to about 12 degrees Brix when added to a consumable, e.g. a beverage.

In another embodiment, the steviol glycoside composition of the present invention has a aqueous solubility of at least about 1.0% (w/w).

Also disclosed, but not part of the present invention, are sweetener compositions comprising the steviol glycoside compositions. In one aspect, the sweetener composition further comprises allulose. In another aspect, the sweetener composition further comprises additional sweeteners, additives and/or functional ingredients.

The sweetener compositions can be zero-calorie, low-calorie, mid-calorie or full-calorie. In a particular aspect, the sweetener compositions are zero-, low- or mid-calorie and further comprise a sweetener selected from the group consisting of sucrose, high fructose corn syrup, fructose, glucose and combinations thereof.

In still another aspect, the present disclosure also relates to consumables comprising the steviol glycoside compositions and sweetener compositions comprising the same. In a particular aspect, the consumable is a beverage or beverage product. The beverages or beverage products can further contain additional sweeteners, additives and/or functional ingredients. The beverages can be zero-calorie, low-calorie, mid-calorie or full-calorie.

In a particular aspect, zero-, low-, or mid calorie beverages comprise the steviol glycoside composition obtained by the method of the present invention or a sweetener composition comprising the same. In one particular aspect, the steviol glycoside composition is the only sweetener in a zero-calorie beverage. In another particular aspect, the steviol glycoside composition is present in combination with at least one additional sweetener in low- and mid-calorie beverages.

In still another aspect, the present disclosure, which is not part of the invention, relates to methods of preparing a sweetened consumable comprising a steviol glycoside composition of the present invention or a sweetener composition comprising the same. In one particular aspect, the method comprises providing a consumable and adding a steviol glycoside composition obtained by the method of the present invention or a sweetener composition comprising the same to the consumable.

The present invention relates to a method of preparing a steviol glycoside composition comprising (i) providing enriched stevia extract comprising from about 5% to about 30% rebaudioside M by weight; (ii) combining the enriched stevia extract with a solvent system comprising at least one organic solvent to provide a first solution; (iii) stirring the first solution and/or seeding the solution to promote crystal formation; and (iv) separating the crystals from the first solution to provide the steviol glycoside composition; wherein the total steviol glycoside content of the steviol glycoside composition is about 95% or greater; and rebaudioside D accounts for about 55% to about 70%, rebaudioside M for about 18% to about 30%, rebaudioside A for about 0.5% to about 4%, rebaudioside N for about 0.5% to about 5%, rebaudioside O for about 0.5% to about 5%, and rebaudioside E for about 0.2% to about 2%, of the total steviol glycoside content of the steviol glycoside composition. The method can further comprise (v) mixing the steviol glycoside composition with water to provide a second solution; (vi) heating the second solution for a period of time sufficient to provide a concentrated solution; and (vii) spray drying the concentrated solution to provide a steviol glycoside composition having a water solubility of about 0.08% (w/w) or greater. In exemplary embodiments, the water solubility of the steviol glycoside composition is about 1.0% (w/w) or greater.

### BRIEF DESCRIPTION OF THE DRAWINGS

FIG. 1: Shows the results of a sensory evaluation comparison of diet cola beverages sweetened with 600 ppm Reb M or 600 ppm A95.
FIG. 2: Shows the results of a sensory evaluation of 5 Brix beverages sweetened with 5% sugar, 200 ppm A95 or 200 ppm of 70 wt% Reb D/30 wt% Reb M.
FIG. 3: Shows the results of a sensory evaluation of 10 Brix beverages sweetened with 10% sugar, 900 ppm A95 or 900 ppm of 70 wt% Reb D/30 wt% Reb M.

### DETAILED DESCRIPTION OF THE INVENTION

The steviol glycoside composition has a total steviol glycoside content of about 95% by weight or greater on a dry basis. In some embodiments, the steviol glycoside composition has a total steviol glycoside content of about 96% or greater, about 97% or greater, about 98% or greater or about 99% or greater.

"Total steviol glycoside content", as used herein, refers to the total sum of all steviol glycosides concentration on weight/weight dried basis in a sample.

The major component of the steviol glycoside composition is comprised of rebaudioside D and rebaudioside M. Typically, rebaudioside M and rebaudioside D comprise from about 73% to about 95% of the total steviol glycoside content, such as, for example, from about 73% to about 90%, from about 73% to about 85%, from about 73% to about 80%, from about 80% to about 95%, from about 80% to about 90%, from about 80% to about 85%, from about 85% to about 95%, and from about 85% to about 90%. In a particular embodiment, rebaudioside M and rebaudioside D account for from about 85% to about 95% of the total steviol glycoside content. In another particular embodiment, rebaudioside M and rebaudioside D do not account for more than about 90% of the steviol glycoside composition.

The minor component of the steviol glycoside composition is comprised of rebaudioside A, rebaudioside N, rebaudioside O and rebaudioside E. These four steviol glycosides account for from about 1.7% to about 14% of the total steviol glycoside content, such as, for example, from about 1.7% to about 10%, from about 1.7% to about 5%, from about 5% to about 14%, from about 5% to about 10% and from about 10% to about 14%. In a particular embodiment, rebaudiosides A, N, O and E account for from about 5% to about 10% of the total steviol glycoside content, such as, for example, from about 5% to about 8%.

Taken together, rebaudiosides D, M, A, N, O and E account for at least about 90% total steviol glycoside content. In some embodiments, these steviol glycosides account for at least about 91% of the total steviol glycoside content, at least about 92%, at least about 93%, at least about 94%, at least about 95%, at least about 96%, at least about 97%.

The steviol glycoside composition can further include steviol glycosides other than rebaudiosides D, M, A, N, O and E. Exemplary steviol glycosides include, but are not limited to, e.g. steviolmonoside, steviolbioside, rubusoside, dulcoside B, dulcoside A, rebaudioside B, rebaudioside G, stevioside, rebaudioside C, rebaudioside F, rebaudioside I, rebaudioside H, rebaudioside L, rebaudioside K, rebaudioside J, rebaudioside M2, rebaudioside D2, synthetic steviol glycosides, e.g. enzymatically glucosylated steviol glycosides and combinations thereof

Rebaudioside M comprises from about 18% to about 30% of the total steviol glycoside content of the steviol glycoside composition, such as, for example, from about 20% to about 30%, from about 20% to about 25%, and from about 25% to about 30%.

Rebaudioside D comprises from about 55% to about 70% of the total steviol glycoside content of the steviol glycoside composition, such as, for example, from about 55% to about 65%, from about 55% to about 60%, from about 60% to about 70%, from about 60% to about 65%, and from about 65% to about 70%.

Rebaudioside A comprises from about 0.5% to about 4% of the total steviol glycoside content of the steviol glycoside composition, such as, for example, from about 0.5% to about 3%, from about 0.5% to about 2%, from about 0.5% to about 1%, from about 1% to about 4%, from about 1% to about 3%, from about 1% to about 2%, from about 2% to about 4%, from about 2% to about 3% and from about 3% to about 4%.

Rebaudioside N comprises from about 0.5% to about 5% of the total steviol glycoside content of the steviol glycoside composition, such as, for example, from about 0.5% to about 4%, from about 0.5% to about 3%, from about 0.5% to about 2%, from about 0.5% to about 1%, from about 1% to about 5%, from about 1% to about 4, from about 1% to about 3%, from about 1% to about 2%, from about 2% to about 5%, from about 2% to about 4%, from about 2% to about 3%, from about 3% to about 5%, from about 3% to about 4%, and from about 4% to about 5%.

Rebaudioside O comprises from about 0.5% to about 5% of the total steviol glycoside content of the steviol glycoside composition, such as, for example, from about 0.5% to about 4%, from about 0.5% to about 3%, from about 0.5% to about 2%, from about 0.5% to about 1%, from about 1% to about 5%, from about 1% to about 4%, from about 1% to about 3%, from about 1% to about 2%, from about 2% to about 5%, from about 2% to about 4%, from about 2% to about 3%, from about 3% to about 5%, from about 3% to about 4%, and from about 4% to about 5%.

Rebaudioside E comprises from about 0.2% to about 2% of the total steviol glycoside content of the steviol glycoside composition, such as, for example, from about 0.2% to about 1.5%, from about 0.2% to about 1%, from about 0.2% to about 0.5%, from about 0.5% to about 2%, from about 0.5% to about 1.5%, from about 0.5% to about 1%, from about 1% to about 2%, from about 1% to about 1.5% and from about 1.5% to about 2%.

A steviol glycoside composition comprises rebaudiosides D, M, A, N, O and E, wherein the total steviol glycoside content is about 95% or greater.

The method of the invention allows to prepare a steviol glycoside composition comprising rebaudiosides D, M, A, N, O and E, wherein the total steviol glycoside content is about 95% or greater, wherein rebaudioside D accounts for from about 55% to about 70% of the total steviol glycoside content, rebaudioside M accounts for from about 18% to about 30% of the total steviol glycoside, rebaudioside A accounts for from about 0.5% to about 4% of the total steviol glycoside content, rebaudioside N accounts for from about 0.5% to about 5% of the total steviol glycoside content, rebaudioside O accounts for from about 0.5% to about 5% of the total steviol glycoside content and rebaudioside E accounts for from about 0.2% to about 2% of the total steviol glycoside content.

In a more particular embodiment, rebaudiosides D, M, A, N, O and E account for at least about 90% of the total steviol glycoside content.

In a yet further embodiment, rebaudiosides D and M account for from about 80% to about 90% of the total steviol glycoside content.

According to the method of the present invention, which is defined by the claims, the steviol glycoside composition defined above is produced by crystallization of stevia extract enriched with rebaudiosides D, M, N and O ("enriched stevia extract") from a solvent system comprising at least one organic solvent and optionally, water. According to the invention, the steviol glycoside composition is prepared by (i) combining enriched stevia extract comprising from about 5% to about 30% rebaudioside M by weight with a solvent system comprising least one organic solvent, and optionally, water, to provide a solution, (ii) stirring the solution and/or seeding to solution to promote crystal formation, and (iii) separating the crystals from the solution to provide the steviol glycoside composition.

The organic solvent is selected from the group including methanol, ethanol, n-propanol, iso-propanol, butanol, acetone, or any other organic solvent known to art. In a particular embodiment, the organic solvent is ethanol.

In exemplary embodiments, a method of preparing a steviol glycoside composition comprises first crystallizing the enriched stevia extract, as described herein above, to provide crystallized enriched stevia extract, followed by (i) mixing the steviol glycoside composition with water to provide a solution; (ii) heating the solution for a period of time sufficient to provide a concentrated solution; and (iii) spray drying the concentrated solution to provide a steviol glycoside composition of the present invention. In exemplary embodiments, the steviol glycoside composition produced by this method has a water solubility of about 0.08% (w/w) or greater, such as, for example, about 1.0% or greater, about 1.5% or greater, about 2.0% or greater or about 2.5% or greater. In exemplary embodiments, the steviol glycoside composition has a water solubility of about 1.0% or greater.

In one embodiment, the solution is heated in (ii) to a temperature above 100 °C, such as, for example, from about 100 °C to about 120 °C.

In one embodiment, the concentrated solution is maintained at an elevated temperature similar to the heating temperature in (ii) while spray drying. In one embodiment, the concentrated solution is maintained at a temperature of at least about 100 °C, at least about 105 °C, at least about 110 °C, at least about 115 °C or at least about 120 °C. In other embodiments, the concentrated solution is maintained at a temperature between about 100 °C and about 120 °C while spray drying, such as, for example, from about 110 °C and about 120 °C.

In enriched stevia extract, the relative content of rebaudiosides D, M, N and O (calculated relative to total steviol glycosides content) is higher than the relative content of rebaudiosides D, M, N and O (calculated relative to total steviol glycosides content) in the stevia leaves used as raw material. Enriched stevia extract is obtained from dried stevia leaves according to methods described in U.S. Patent No. 8,981,081; U.S.S.N.s. 14/603,941, 14/033,563, 14/362,275, 14/613,615, 14/615,888; PCT applications PCT/US12/70562, and PCT/US14/031129.

The enriched stevia extract comprises from about 5% to about 30% rebaudioside M by weight. In more particular embodiments, enriched stevia extract comprises 1% to about 5% rebaudioside E by weight, from about 1% to about 10% rebaudioside O by weight, from about 10% to about 30% rebaudioside D by weight, from about 1% to about 10% rebaudioside N by weight, from about 5% to about 30% rebaudioside M by weight and from about 5% to about 15% rebaudioside A by weight. In even more particular embodiments, enriched stevia extract comprises about 1.97% rebaudioside E, 7.82% rebaudioside O, 23.92% rebaudioside D, 6.92% rebaudioside N, 12.17% rebaudioside M, 11.91% rebaudioside A and about 2% of other steviol glycosides (all percentages are on w/w anhydrous basis).

In other embodiments, a method of preparing a steviol glycoside composition comprises (i) combining a crystallized steviol glycoside composition with water to provide a solution; (ii) heating the solution for a period of time sufficient to provide a concentrated solution; and (iii) spray drying the concentrated solution to provide a steviol glycoside composition of the present invention. The steviol glycoside compositions produced by this method have a water solubility of about 1.0% (w/w) or greater when measured in water at room temperature for 10 minutes, such as, for example, about 1.5% or greater, about 2.0% or greater or about 2.5% or greater.

In one aspect, the steviol glycoside composition produced by the method of the present invention has a water solubility of about 1.0% (w/w) or greater when measured in water at room temperature for 10 minutes, such as, for example, about 1.5% or greater, about 2.0% or greater, about 2.5% or greater, or from about 1% to about 2.5%.

Moreover, in some embodiments, a steviol glycoside composition produced by the method of the present invention has greater aqueous solubility than certain steviol glycoside mixtures of rebaudioside D and rebaudioside M only. In a particular embodiment, a steviol glycoside composition of the present invention has an aqueous solubility of at least 0.3% (w/w) greater than the aqueous solubility of a mixture containing about 70% rebaudioside D and about 30% rebaudioside M by weight when measured in water at room temperature for 10 minutes, such as for example, at least about 0.4% greater, at least about 0.5% greater, or at least about 1% greater.

As used herein, "room temperature" and "ambient temperature" are used interchangeably, and refer to about 25 °C.

A number of methods are known in the art for determining aqueous solubility. In one such method, solubility can be determined by a solvent addition method in which a weighed sample is treated with aliquots of water. The mixture is generally vortexed and/or sonicated between additions to facilitate dissolution. Complete dissolution of the test material is determined by visual inspection. Solubility is calculated based on the total solvent used to provide complete dissolution. In particular, the amount of sample added divided by the weight of the solute (water + sample) x 100 provides the solubility in (%w/w). For example, if 0.18 g of sample can be dissolved in 30 g of water, the water solubility is 0.6%.

The steviol glycoside compositions provide improved (i.e. less) astringency, acid- off-notes and sweet aftertaste when added to a consumable (i.e. a beverage) compared to certain steviol glycoside mixtures of rebaudioside D and rebaudioside M only.

In one aspect, the steviol glycoside composition provides a sucrose equivalence of about 2% (w/v) or greater when added to a consumable (e.g. a beverage), such as, for example, about 3% or greater, about 4% or greater, about 5% or greater, about 6% or greater, about 7% or greater, about 8% or greater, about 9% or greater, about 10% or greater, about 11% or greater, about 12% or greater, about 13% or greater or about 14% or greater.

In another aspect, the steviol glycoside composition provides a degrees Brix level of about 3 to about 12 when added to a consumable (e.g. a beverage), such as, for example, about 3 degrees Brix or greater, about 4 degrees Brix or greater, about 5 degrees Brix or greater, about 5 degrees Brix or greater, about 7 degrees Brix or greater, about 8 degrees Brix or greater, about 9 degrees Brix or greater, about 10 degrees Brix or greater and about 11 degrees Brix or greater. The amount of sucrose, and thus another measure of sweetness, in a reference solution may be described in degrees Brix (°Bx). One degree Brix is 1 gram of sucrose in 100 grams of solution and represents the strength of the solution as percentage by weight (% w/w) (strictly speaking, by mass).

In still another aspect, the steviol glycoside composition provides a concentration from about 50 ppm to about 900 ppm when added to a consumable (e.g. a beverage). In a more particular embodiment, the amount of steviol glycosides in the composition is effective to provide a concentration from about 50 ppm to about 600 ppm when added to a consumable (e.g. a beverage), such as, for example, from about 50 to about 500 ppm, from about 50 ppm to about 400 ppm, from about 50 ppm to about 300 ppm, from about 50 ppm to about 200 ppm, from about 50 ppm to about 100 ppm, from about 100 ppm to about 600 ppm, from about 100 ppm to about 500 ppm, from about 100 ppm to about 400 ppm, from about 100 ppm to about 300 ppm, from about 100 ppm to about 200 ppm, from about 200 ppm to about 600 ppm, from about 200 ppm to about 500 ppm, from about 200 ppm to about 400 ppm, from about 200 ppm to about 300 ppm, from about 300 ppm to about 600 ppm, from about 300 ppm to about 500 ppm, from about 300 ppm to about 400 ppm, from about 400 ppm to about 600 ppm, from about 400 ppm to about 500 ppm and from about 500 ppm to about 600 ppm.

In an exemplary aspect, the sweetener composition comprises a steviol glycoside composition produced by the method of the present invention and at least one additional substance.

### Methods of Use

The steviol glycoside compositions obtained by the method of the present invention and the sweetener compositions can be used to impart sweetness or to enhance the flavor of consumables.

In one aspect, a method of preparing a sweetened consumable comprises (i) providing a consumable and (ii) adding a steviol glycoside composition of the present invention or a sweetener composition comprising the same to the consumable to provide sweetened consumable. In exemplary aspects, the consumable is unsweetened.

In a particular aspect, which is not part of the present invention, a method of preparing a sweetened consumable comprises (i) providing an unsweetened consumable and (ii) adding a steviol glycoside composition of the present invention or a composition comprising the same to the unsweetened consumable to provide a sweetened consumable.

In one aspect also not part of the present invention, a method of preparing a sweetened beverage comprises (i) providing a beverage and (ii) adding a steviol glycoside composition produced by the method of the present invention or a sweetener composition comprising the same to the beverage to provide a sweetened beverage.

In a particular aspect also not part of the present invention, a method of preparing a sweetened beverage comprises (i) providing an unsweetened beverage and (ii) adding a steviol glycoside composition produced by the method of the present invention or a composition comprising the same to the unsweetened beverage to provide a sweetened beverage.

### EXAMPLES

### Example 1: Preparation of Enriched Stevia Extract

Two kg of *Stevia rebaudiana* dried leaves (dried at 45°C to 8.0% moisture content) comprising on dry weight basis Stevioside - 2.2%, Reb A - 7.1%, Reb O - 0.05%, Reb C - 1.1%, Reb *D* - 0.13%, Reb F - 0.1%, Reb *M -* 0.05% Reb *N* - 0.06%, and Reb E - 0.12% - were loaded into a continuous extractor and the extraction was carried out with 40 L of water at a pH of 6.5 at 40°C for 160 min. The filtrate was collected and subjected to chemical treatment. Calcium oxide in the amount of 400 g was added to the filtrate to adjust the pH to 9.0, and the mixture was maintained for 15 min with slow agitation. Then, the pH was adjusted to around 3.0 by adding 600 g of FeSO₄ and the mixture was maintained for 15 min with slow agitation. The precipitate was removed by filtration on a plate-and-frame filter press using cotton cloth as the filtration material. The filtrate was passed through a column packed with cation-exchange resin Amberlite FCP22 (H⁺) and then, through a column with anion-exchange resin Amberlite FPA53 (OH⁻). After completion, both columns were washed with RO water to recover the steviol glycosides left in the columns and the filtrates were combined. The combined solution containing 120 g total steviol glycosides was passed through 8 columns, wherein each column was packed with 500mL of macroporous polymeric adsorbent YWD-03 (Cangzhou Yuanwei, China). After all extract was passed through the columns, the resin sequentially was washed with 1 volume of water, 2 volumes of 0.5% NaOH, 1 volume of water, 2 volumes of 0.5% HCl, and finally with water until the pH was 7.0. Elution of the adsorbed steviol glycosides was carried out for each column separately with 52% ethanol. Eluates from 7^{th} and 8^{th} columns were combined and mixed with 0.3% of activated carbon (from the total volume of solution). The suspension was maintained at 25°C for 30 min with continuous agitation. Separation of carbon was carried out on a press-filtration system. For additional decolorization the filtrate was passed through the columns packed with cation-exchange resin Amberlite FCP22 (H⁺) followed with anion-exchange resin Amberlite FPA53 A30B (OH⁻). The ethanol was distilled using a vacuum evaporator. The solids content in the final solution was around 35%. The concentrate was dried with spray drier to yield Enriched Stevia Extract powder comprising 1.97% Reb E, 7.82% Reb O, 23.92% Reb D, 6.92% Reb N, 12.17% Reb M, 11.91% Reb A and about 2% of other steviol glycosides (all percentages are on w/w anhydrous basis).

### Example 2: Preparation of Crystalline A95

100g of Enriched Stevia Extract obtained according to Example 1, was dissolved in 700 mL of 70% Ethanol (v/v). The solution was seeded with 20 mg Reb M crystals and agitated moderately for 4 days at 25°C, for crystallization. The crystals were separated by filtration and washed with 70 mL Ethanol. The crystals were dried under vacuum at 80°C for 12 hrs, to yield about 30g of A95.

### Example 3: Characterization of A95

Analytical high performance liquid chromatography analysis, conducted according to conditions provided below, using reference standards obtained from ChromaDex Inc. (USA), demonstrated that the A95 in Example 2 had the chemical composition shown in Table 1.

*HPLC system:* Agilent 1100 series equipped with quaternary pump, autosampler, thermostatted column compartment and DAD detector, interfaced with Chemstation software *HPLC Column:* Agilent Poroshell 120 SB-C18, 4.6mm x 150mm, 2.7µm, at 40°C

### Mobile Phase

Premix Solution ***A:*** 25 % (v/v) Acentonitrile : 75 % (v/v) Phosphate Buffer (10mM, pH 2.6) Premix Solution ***B:*** 32 % (v/v) Acentonitrile : 68 % (v/v) Phosphate Buffer (10mM, pH 2.6) Gradient program

| Time (min) | Premix Solution ***A,*** % v/v | Premix Solution ***B,*** % v/v |
|---|---|---|
| 0 | 100 | 0 |
| 12 | 100 | 0 |
| 12.5 | 50 | 50 |
| 13 | 0 | 100 |
| 40 | 0 | 100 |

*Flow rate:* 0.5 mL/min
*Injection volume:* 5 µL
*Run time:* 40 mins
*Post time:* 10 mins
*Autosampler temperature:* Ambient
*Detector:* UV at 210 nm (4 nm bw), Reference: 360 nm (100 nm bw)

**Table 1**

| **A95 Component** | **Percent, as determined by HPLC** |
|---|---|
| Rebaudioside E | 0.86 |
| Rebaudioside O | 1.37 |
| Rebaudioside D | 63.95 |
| Rebaudioside N | 2.95 |
| Rebaudioside M | 25.37 |
| Rebaudioside A | 1.32 |
| Stevioside | 0.03 |
| Rebaudioside C | 0.01 |
| Rebaudioside B | 0.22 |
| **Total Steviol Glycoside Content** | **96.07** |

### Example 4: Comparison of Sensory Properties of Diet Cola Beverages

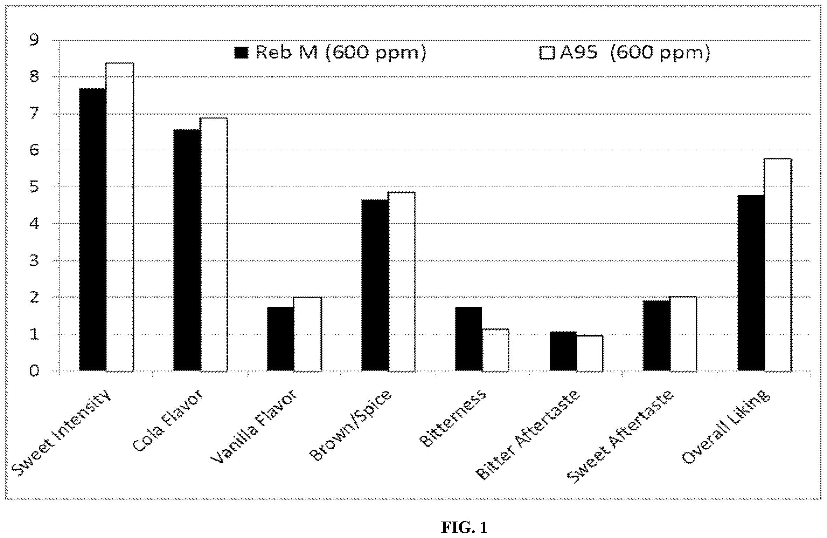

The sensory properties of diet cola beverages sweetened with either (i) Reb M (600 ppm) or (ii) A95 (600 ppm) were evaluated by a panel of ten trained sensory evaluators. The results are shown in Figure 1. The diet cola beverage containing A95 out-performed the diet cola beverage containing Reb M in sweetness intensity, cola flavor, vanilla flavor, brown/spice flavor, sweet aftertaste and overall liking. The diet cola beverage sweetened with A95 also exhibited less bitterness and bitter aftertaste than the diet cola beverage sweetened with Reb M.

### Example 5: Sensory Properties of Fruit-Flavored Carbonated Soft Drinks

The sensory properties of zero-calorie fruit-flavored carbonated soft drinks sweetened with either (i) A95, allulose and a flavor modulator or (ii) A95, allulose and erythritol were evaluated. The beverage sweetened with (i) contained the ingredients shown in Table 1.

**Table 1**

| **Ingredient** | **Amount** |
|---|---|
| A95 | 470-500 ppm |
| Allulose | 2.5-2.8% |
| Flavor modulator | 0.02 to 0.05% |

The beverage sweetened with (ii) contained the ingredients shown in Table 2.

**Table 2**

| **Ingredient** | **Amount** |
|---|---|
| A95 | 440-480 ppm |
| Allulose | 2.8-3.0% |
| Erythritol | 0.4-0.7% |

The usage of A95 in combination with allulose, erythritol and/ or flavor modulators imparted a superior sweetness profile, with no bitter aftertaste and only moderate linger.

### Example 6: Sensory Properties of Ready-to-Drink Tea

The sensory properties of zero-calorie ready-to-drink teas sweetened with either (i) A95, allulose and a flavor modulator or (ii) A95, allulose and erythritol were evaluated. The beverage sweetened with (i) contained the ingredients shown in Table 1.

**Table 1**

| **Ingredient** | **Amount** |
|---|---|
| A95 | 450-470 ppm |
| Allulose | 3-3.4% |
| Flavor modulator | 0.05-0.1% |

The beverage sweetened with (ii) contained the ingredients shown in Table 2.

**Table 2**

| **Ingredient** | **Amount** |
|---|---|
| A95 | 450-470 ppm |
| Allulose | 3-3.4% |
| Erythritol | 0.2-0.3% |

Both zero-calorie tea beverages were 8.6 Brix. The usage of A95 in combination with allulose, erythritol and/ or flavor modulators imparted a superior sweetness profile, with no bitter aftertaste and only moderate linger.

### Example 7: Sensory Properties of Flavored Vitamin Water

The sensory properties of zero-calorie flavored vitamin water sweetened with A95, allulose and erythritol were evaluated. The beverage contained the ingredients shown in Table 1.

**Table 1**

| **Ingredient** | **Amount** |
|---|---|
| A95 | 200-250 ppm |
| Allulose | 3-3.4% |
| Erythritol | 0.025-0.05% |

The usage of A95 in combination with allulose, erythritol and/ or flavor modulators imparted a superior sweetness profile, with no bitter aftertaste and only moderate linger.

### Example 8: Sensory Properties of A95 compared to Reb D/M blends

5 Brix and 10 Brix beverages were prepared by combining purified water containing 303 ppm citric acid and a sweetener. The 5 Brix beverages contained one of the following sweeteners: (i) 5% (wt/wt) sugar, (ii) 200 ppm A95 or (iii) 200 ppm of a 70wt% Reb D/30wt% Reb M blend. The 10 Brix beverages contained one of the following sweeteners: (i) 10% (wt/wt) sugar, (ii) 900 ppm A95 or (iii) 900 ppm of a 70wt% Reb D/30wt% Reb M blend.

The beverages were served at room temperature in 2 oz clear plastic sample cups. 15 panelists evaluated the beverages for various tastes and flavors. Prior to sample evaluation, all panelists rinsed their palate with warm water. The assessors were instructed to take a sip of each beverage and rate the mouth feel and taste/flavor characteristics. 15 seconds after ingestion panelists were instructed to rate sweetness linger and aftertaste. Between samples evaluation a 1 minute rest period was allowed during which they rinsed their palate with warm water and 0.25% NaCl solution.

The various tastes and flavors measured in the evaluation are defined as follows:

| **TASTE/FLAVOR:** | |
|---|---|
| **Attribute** | **Definition** |
| Sweet Taste | The taste stimulated by sucrose other sugars and artificial sweeteners. |
| Bitter Taste | Taste stimulated by certain substances such as quinine, caffeine. |
| Acidity | The sour taste associated with citric acid, phosphoric or malic acid. |
| Off-note (Metallic/ Licorice Flavor) | Fruity flavour associated with licorice or anise. Metallic note associated with Ferrous sulfate. |

| **AFTERTASTE:** | |
|---|---|
| **Attribute** | **Definition** |
| Sweet Aftertaste | The intensity of the sweet taste, 15 minutes after ingestion. |
| Bitter Aftertaste | Aftertaste stimulated by certain substances such as quinine, or caffeine. |

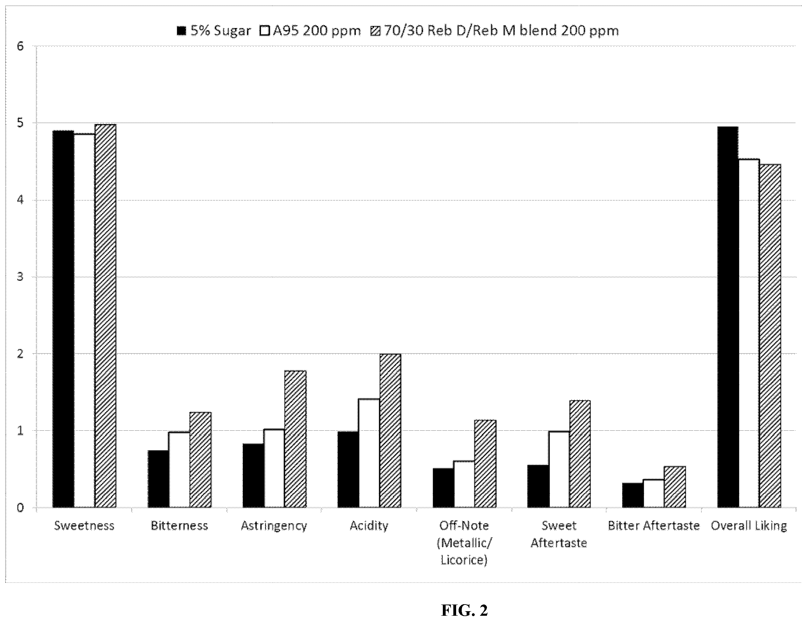

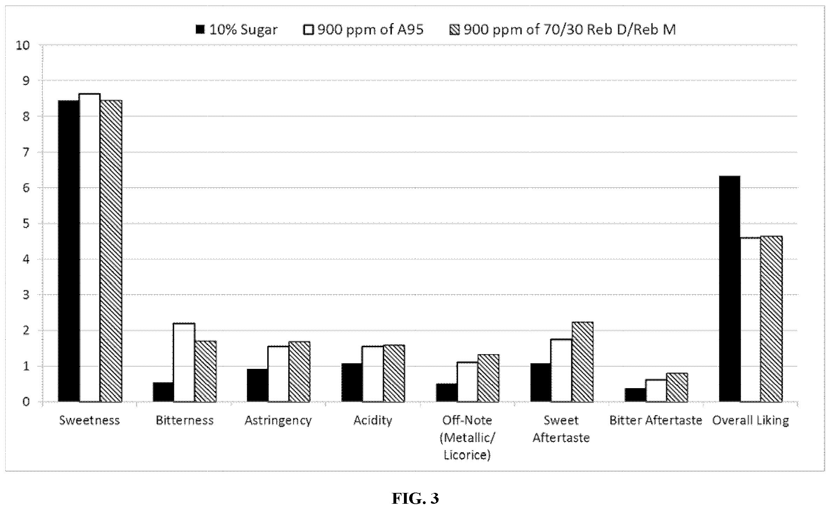

The results of the sensory evaluation for the 5 Brix beverages is provided in Table 1 and illustrated in Figure 2. The results of the sensory evaluation for the 10 Brix beverage is provided in Table 2 and illustrated in Figure 3.

**Table 1: Acidified water 5 brix target - A95 vs Reb D and Reb M blends**

| **Attribute** | **5% Sugar** | **200 ppm of A 95** | **200 ppm of 70/30 Reb D/Reb M blend** | **P-Value** | **Sig** |
|---|---|---|---|---|---|
| **Sweetness** | 4.91 | 4.86 | 4.98 | 0.0997 | |
| | b | ab | a | | |
| **Bitterness** | 0.75 | 0.98 | 1.23 | 0.0083 | ^{∗∗∗} |
| | b | b | a | | |
| **Astringency** | 0.84 | 1.02 | 1.77 | 0.0035 | ^{∗∗∗} |
| | c | b | a | | |
| **Acidity** | 0.99 | 1.41 | 1.99 | 0.0012 | ^{∗∗∗} |
| | b | b | a | | |
| **Off-Note (Metallic/ Licorice)** | 0.52 | 0.61 | 1.13 | 0.0081 | ^{∗∗∗} |
| | c | b | a | | |
| **Sweet Aftertaste** | 0.56 | 0.99 | 1.38 | 0.0046 | ^{∗∗∗} |
| | | | | | |
| **Bitter Aftertaste** | 0.33 | 0.37 | 0.53 | 0.5487 | NS |
| | a | b | b | | |
| **Overall Liking** | 4.96 | 4.53 | 4.46 | 0.1964 | ^{∗} |

| | | | | | |
|---|---|---|---|---|---|
| ^{∗}= 80% confidence interval, ^{∗∗}= 90% Confidence interval, ^{∗∗∗}=95% Confidence interval Same letter indicates no significant difference in taste. | | | | | |

**Table 2: Acidified water 10 brix target - A95 vs Reb D and Reb M blends**

| **Attribute** | **10% Sugar** | **900 ppm of A95** | **900 ppm of 70/30 Reb D/Reb M** | **P-Value** | **Sig** |
|---|---|---|---|---|---|
| **Sweetness** | 8.45 | 8.62 | 8.45 | 0.8794 | NS |
| | b | a | a | | |
| **Bitterness** | 0.55 | 2.18 | 1.72 | 0.0147 | ^{∗∗∗} |
| | b | a | a | | |
| **Astringency** | 0.92 | 1.55 | 1.71 | 0.0762 | ^{∗∗} |
| | b | a | a | | |
| **Acidity** | 1.08 | 1.56 | 1.61 | 0.0508 | ^{∗∗} |
| | b | a | a | | |
| **Off-Note (Metallic/ Licorice)** | 0.51 | 1.11 | 1.34 | 0.0028 | ^{∗∗∗} |
| | c | b | a | | |
| **Sweet Aftertaste** | 1.08 | 1.75 | 2.25 | 0.0029 | ^{∗∗∗} |
| | b | a | a | | |
| **Bitter Aftertaste** | 0.37 | 0.62 | 0.82 | 0.0464 | ^{∗∗∗} |
| | a | b | b | | |
| **Overall Liking** | 6.34 | 4.6 | 4.65 | 0.0091 | ^{∗∗∗} |

| | | | | | |
|---|---|---|---|---|---|
| ^{∗}= 80% confidence interval, ^{∗∗}= 90% Confidence interval, ^{∗∗∗}=95% Confidence interval Same letter indicates no significant difference in taste. | | | | | |

Beverages containing the 70% Reb D/30% Reb M sweetener were significantly different from A95 and sugar at a 95% confidence level across key attributes, regardless of Brix. With respect to the 5 Brix beverages, the beverages with A95 and 70% Reb D/30% Reb M sweeteners had parity of sweetness. The beverages containing the 70% Reb D/30% Reb M sweetener had significantly higher astringency, acid, off-notes, and sweet aftertaste compared to beverages containing the A95 sweetener. With respect to the 10 Brix beverages, the beverages with A95 and 70% Reb D/30% Reb M sweeteners had parity of sweetness. The beverages containing the 70% Reb D/30% Reb M sweetener had significantly higher sweet aftertaste compared to beverages containing the A95 sweetener.

### Example 9: Preparation of A95 via spray-drying method

A95 that was crystallized according to the method of Example 2 and having water solubility of 0.08% (w/w) (determined according to procedure described above) was mixed with 225 liters of water in airtight pressure vessel. The mixture temperature was increased to 115 °C to obtain a concentrated solution. The A95 concentrated solution was maintained at 115°C while being fed via insulated piping to spray drier (YPG-250, Changzhou Lemar Drying Machinery, China) operating at 185 °C inlet and 100 °C outlet temperature. 22 kg of a powder was obtained which had a water solubility of about 2% (w/w) (determined according by the procedure described above).

## Claims

1. A method of preparing a steviol glycoside composition comprising
(i) providing enriched stevia extract comprising from about 5% to about 30% rebaudioside M by weight;
(ii) combining the enriched stevia extract with a solvent system comprising at least one organic solvent to provide a first solution;
(iii) stirring the first solution and/or seeding the solution to promote crystal formation; and
(iv) separating the crystals from the first solution to provide the steviol glycoside composition;
wherein the total steviol glycoside content of the steviol glycoside composition is about 95% or greater; and
rebaudioside D accounts for from about 55% to about 70% of the total steviol glycoside content of the steviol glycoside composition, rebaudioside M accounts for from about 18% to about 30% of the total steviol glycoside content of the steviol glycoside composition, rebaudioside A accounts for from about 0.5% to about 4% of the total steviol glycoside content of the steviol glycoside composition, rebaudioside N accounts for from about 0.5% to about 5% of the total steviol glycoside content of the steviol glycoside composition, rebaudioside O accounts for from about 0.5% to about 5% of the total steviol glycoside content of the steviol glycoside composition, and rebaudioside E accounts for from about 0.2% to about 2% of the total steviol glycoside content of the steviol glycoside composition.

2. The method of claim 1, wherein the organic solvent is selected from the group consisting of methanol, ethanol, n-propanol, iso-propanol, butanol and acetone.

3. The method of claim 2, wherein the organic solvent is ethanol.

4. The method of claim 1, wherein the first solution is seeded with rebaudioside M crystals.

5. The method of claim 1, further comprising the steps of
(v) mixing the steviol glycoside composition with water to provide a second solution;
(vi) heating the second solution for a period of time sufficient to provide a concentrated solution; and
(vii) spray drying the concentrated solution to provide a steviol glycoside composition having a water solubility of about 0.08% (w/w) or greater.

6. The method of claim 5, wherein the water solubility of the steviol glycoside composition is about 1.0% (w/w) or greater.

7. The method of claim 5, wherein the water solubility of the steviol glycoside composition is about 2.0% (w/w) or greater.

8. The method of claim 5, wherein the solution in (vi) is heated to a temperature above 100 °C.

9. The method of claim 5, wherein the solution in (vi) is heated to a temperature from about 100 °C to about 120 °C.

10. The method of claim 5, wherein the concentrated solution is maintained at the temperature in (vi) while spray drying.

11. The method of claim 5, wherein the concentrated solution is maintained at a temperature of at least 100 °C while spray drying.

12. The method of claim 11, wherein the concentrated solution is maintained at a temperature between about 100 °C and about 120 °C while spray drying.

13. The method of claim 11, wherein the concentrated solution is maintained at a temperature between about 110 °C and about 120 °C while spray drying.

## Patentansprüche

1. Verfahren zur Herstellung einer Steviolglykosidzusammensetzung, das Folgendes umfasst:
(i) Bereitstellen von angereichertem Steviaextrakt, der etwa 5 Gew.-% bis etwa 30 Gew.-% Rebaudiosid M umfasst;
(ii) Vereinigen des angereicherten Steviaextrakts mit einem Lösungsmittelsystem, das mindestens ein organisches Lösungsmittel umfasst, zur Bereitstellung einer ersten Lösung;
(iii) Rühren der ersten Lösung und/oder Beimpfen der Lösung zur Förderung von Kristallbildung; und
(iv) Abtrennen der Kristalle aus der ersten Lösung zur Bereitstellung der Steviolglykosidzusammensetzung;
wobei der Gesamtsteviolglykosidgehalt der Steviolglykosidzusammensetzung etwa 95 % oder mehr beträgt und
Rebaudiosid D etwa 55 % bis etwa 70 % des Gesamtsteviolglykosidgehalts der Steviolglykosidzusammensetzung ausmacht, Rebaudiosid M etwa 18 % bis etwa 30 % des Gesamtsteviolglykosidgehalts der Steviolglykosidzusammensetzung ausmacht, Rebaudiosid A etwa 0,5 % bis etwa 4 % des Gesamtsteviolglykosidgehalts der Steviolglykosidzusammensetzung ausmacht, Rebaudiosid N etwa 0,5 % bis etwa 5 % des Gesamtsteviolglykosidgehalts der Steviolglykosidzusammensetzung ausmacht, Rebaudiosid 0 etwa 0,5 % bis etwa 5 % des Gesamtsteviolglykosidgehalts der Steviolglykosidzusammensetzung ausmacht, und Rebaudiosid E etwa 0,2 % bis etwa 2 % des Gesamtsteviolglykosidgehalts der Steviolglykosidzusammensetzung ausmacht.

2. Verfahren nach Anspruch 1, wobei das organische Lösungsmittel aus der Gruppe bestehend aus Methanol, Ethanol, n-Propanol, Isopropanol, Butanol und Aceton ausgewählt ist.

3. Verfahren nach Anspruch 2, wobei es sich bei dem organischen Lösungsmittel um Ethanol handelt.

4. Verfahren nach Anspruch 1, wobei die erste Lösung mit Rebaudiosid-M-Kristallen beimpft wird.

5. Verfahren nach Anspruch 1, das ferner folgende Schritte umfasst:
(v) Mischen der Steviolglykosidzusammensetzung mit Wasser zur Bereitstellung einer zweiten Lösung;
(vi) Erhitzen der zweiten Lösung über einen zur Bereitstellung einer konzentrierten Lösung ausreichenden Zeitraum; und
(vii) Sprühtrocknen der konzentrierten Lösung zur Bereitstellung einer Steviolglykosidzusammensetzung mit einer Wasserlöslichkeit von etwa 0,08 % (w/w) oder mehr.

6. Verfahren nach Anspruch 5, wobei die Wasserlöslichkeit der Steviolglykosidzusammensetzung etwa 1,0 % (w/w) oder mehr beträgt.

7. Verfahren nach Anspruch 5, wobei die Wasserlöslichkeit der Steviolglykosidzusammensetzung etwa 2,0 % (w/w) oder mehr beträgt.

8. Verfahren nach Anspruch 5, wobei die Lösung in (vi) auf eine Temperatur über 100 °C erhitzt wird.

9. Verfahren nach Anspruch 5, wobei die Lösung in (vi) auf eine Temperatur von etwa 100 °C bis etwa 120 °C erhitzt wird.

10. Verfahren nach Anspruch 5, wobei die konzentrierte Lösung während des Sprühtrocknens bei der Temperatur in (vi) gehalten wird.

11. Verfahren nach Anspruch 5, wobei die konzentrierte Lösung während des Sprühtrocknens bei einer Temperatur von mindestens 100 °C gehalten wird.

12. Verfahren nach Anspruch 11, wobei die konzentrierte Lösung während des Sprühtrocknens bei einer Temperatur zwischen etwa 100 °C und etwa 120 °C gehalten wird.

13. Verfahren nach Anspruch 11, wobei die konzentrierte Lösung während des Sprühtrocknens bei einer Temperatur zwischen etwa 110 °C und etwa 120 °C gehalten wird.

## Revendications

1. Procédé de préparation d'une composition de glycoside de stéviol comprenant
(i) la fourniture d'un extrait de stévia enrichi comprenant d'environ 5 % à environ 30 % de rébaudioside M en poids ;
(ii) la combinaison de l'extrait de stévia enrichi avec un système de solvant comprenant au moins un solvant organique pour fournir une première solution ;
(iii) l'agitation de la première solution et/ou l'ensemencement de la solution pour favoriser la formation de cristaux ; et
(iv) la séparation des cristaux de la première solution pour fournir la composition de glycoside de stéviol ;
la teneur totale en glycoside de stéviol de la composition de glycoside de stéviol étant d'environ 95 % ou plus ; et
le rébaudioside D comptant pour d'environ 55 % à environ 70 % de la teneur totale en glycoside de stéviol de la composition de glycoside de stéviol, le rébaudioside M comptant pour d'environ 18 % à environ 30 % de la teneur totale en glycoside de stéviol de la composition de glycoside de stéviol, le rébaudioside A comptant pour d'environ 0,5 % à environ 4 % de la teneur totale en glycoside de stéviol de la composition de glycoside de stéviol, le rébaudioside N comptant pour d'environ 0,5 % à environ 5 % de la teneur totale en glycoside de stéviol de la composition de glycoside de stéviol, le rébaudioside 0 comptant pour d'environ 0,5 % à environ 5 % de la teneur totale en glycoside de stéviol de la composition de glycoside de stéviol, et le rébaudioside E comptant pour d'environ 0,2 % à environ 2 % de la teneur totale en glycoside de stéviol de la composition de glycoside de stéviol.

2. Procédé selon la revendication 1, le solvant organique étant choisi dans le groupe constitué par le méthanol, l'éthanol, le n-propanol, l'isopropanol, le butanol et l'acétone.

3. Procédé selon la revendication 2, le solvant organique étant l'éthanol.

4. Procédé selon la revendication 1, la première solution étant ensemencée avec des cristaux de rébaudioside M.

5. Procédé selon la revendication 1, comprenant en outre les étapes de
(v) mélange de la composition de glycoside de stéviol avec de l'eau pour fournir une deuxième solution ;
(vi) chauffage de la deuxième solution pendant une période de temps suffisante pour fournir une solution concentrée ; et
(vii) séchage par pulvérisation de la solution concentrée pour fournir une composition de glycoside de stéviol possédant une solubilité dans l'eau d'environ 0,08 % (p/p) ou plus.

6. Procédé selon la revendication 5, la solubilité dans l'eau de la composition de glycoside de stéviol étant d'environ 1,0 % (p/p) ou plus.

7. Procédé selon la revendication 5, la solubilité dans l'eau de la composition de glycoside de stéviol étant d'environ 2,0 % (p/p) ou plus.

8. Procédé selon la revendication 5, la solution en (vi) étant chauffée jusqu'à une température supérieure à 100 °C.

9. Procédé selon la revendication 5, la solution en (vi) étant chauffée jusqu'à une température d'environ 100 °C à environ 120 °C.

10. Procédé selon la revendication 5, la solution concentrée étant maintenue à la température en (vi) tout en séchant par pulvérisation.

11. Procédé selon la revendication 5, la solution concentrée étant maintenue à une température d'au moins 100 °C tout en séchant par pulvérisation.

12. Procédé selon la revendication 11, la solution concentrée étant maintenue à une température comprise entre environ 100 °C et environ 120 °C tout en séchant par pulvérisation.

13. Procédé selon la revendication 11, la solution concentrée étant maintenue à une température comprise entre environ 110 °C et environ 120 °C tout en séchant par pulvérisation.
